# EUROPÄISCHE PATENTSCHRIFT

(11) **EP 1 456 819 B1**
(45) Veröffentlichungstag und Bekanntmachung des Hinweises auf die Patenterteilung: **02.07.2008**
(21) Anmeldenummer: 02781343.5
(22) Anmeldetag: 09.12.2002
(51) Int. Cl.: G07D 7/12

(54) **VERFAHREN UND VORRICHTUNGEN FÜR DIE ÜBERPRÜFUNG DER ECHTHEIT VON BLATTGUT**
METHODS AND DEVICES FOR VERIFYING THE AUTHENTICITY OF SHEET-TYPE PRODUCTS
PROCEDES ET DISPOSITIFS POUR VERIFIER L'AUTHENTICITE D'ARTICLES EN FEUILLE

(30) Priorität: 10.12.2001 DE 10160578
(43) Veröffentlichungstag der Anmeldung: 15.09.2004
(73) Patentinhaber: Giesecke & Devrient GmbH, 81677 München (DE)
(72) Erfinder: SCHÜTT, Lothar, 85221 Dachau (DE); RICHTER, Hans-Uwe, 81929 München (DE)
(74) Vertreter: Klunker . Schmitt-Nilson . Hirsch
(86) Internationale Anmeldenummer: PCT/EP2002/013941
(87) Internationale Veröffentlichungsnummer: WO 2003/054809

(56) Entgegenhaltungen:
- EP-A- 0 668 576
- DE-A- 19 901 702
- FR-A- 2 801 125
- GB-A- 2 355 522
- US-A- 5 280 333
- US-A1- 2001 006 556

## Beschreibung

Die vorliegende Erfindung betrifft Verfahren und Vorrichtungen für die Überprüfung der Echtheit von Blattgut, insbesondere von Banknoten, mittels ultraviolettem Licht.

Verfahren und Vorrichtungen für die Überprüfung der Echtheit von Blattgut, insbesondere von Banknoten, mittels ultraviolettem Licht sind beispielsweise aus US 5,640,463 oder US 5,960,103 bekannt. Die bekannten Verfahren und Vorrichtungen bauen auf der Erkenntnis auf, daß das für Banknoten verwendete Papier besondere Eigenschaften aufweist, weil es einerseits aus Baumwolle hergestellt ist und andererseits keine optischen Aufheller enthält. Bei der Bestrahlung mit ultraviolettem Licht tritt deshalb kein Fluoreszenzeffekt auf, d. h. das kurzwellige, ultraviolette Licht wird nicht in längerwelliges, sichtbares Licht gewandelt. Zudem wird ein relativ großer Anteil des ultravioletten Lichts von der Oberfläche der zu bewertenden Banknote reflektiert. Fälschungen können somit erkannt werden, falls sie zur Bewertung mit ultraviolettem Licht bestrahlt werden und dabei durch die optischen Aufheller längerwelliges, sichtbares Licht entsteht. Bei bestimmten Fälschungen hat sich allerdings gezeigt, daß die Wandlung des kurzwelligen, ultravioletten Lichts in längerwelliges, sichtbares Licht unterbleibt. In diesen Fällen kann eine Fälschung jedoch dann erkannt werden, wenn das von der Fälschung reflektierte ultraviolette Licht untersucht wird. Sollte die Menge des reflektierten ultravioletten Lichts einen ersten, unteren Schwellenwert unterschreiten oder einen zweiten, oberen Schwellenwert überschreiten, liegt ebenfalls eine Fälschung vor, da die Menge des reflektierten ultravioletten Lichts bei echten Banknoten üblicherweise nur innerhalb eines bestimmten Bereichs liegt.

Die bekannten Verfahren und Vorrichtungen für die Überprüfung der Echtheit von Blattgut, insbesondere von Banknoten, mittels ultraviolettem Licht weisen jedoch den Nachteil auf, daß Fälschungen, die keinen Fluoreszenzeffekt aufweisen und bei denen auch die Bewertung der Menge des reflektierten ultravioletten Lichts keine eindeutige Aussage erlaubt, nicht erkannt werden können.

Aus der GB 2 355 522 A sind ein Verfahren und eine Vorrichtung bekannt, bei denen durch eine Banknote transmittiertes ultraviolettes Licht für die Überprüfung der Echtheit der Banknote verwendet wird. Zusätzlich wird beschrieben, Licht mit einer zweiten Wellenlänge, welche einen möglichst großen Unterschied zu der Wellenlänge des ultravioletten Lichts aufweisen soll, zu verwenden, um die Überprüfung der Echtheit zu verbessern.

Aus dem Dokument geht jedoch nicht hervor, wie eine sichere Beurteilung der Echtheit der Banknote durch die Untersuchung des transmittierten ultravioletten Lichts erreicht werden kann.

FR 2 801 125 A1 beschreibt eine Vielzahl von auf Refexion und Transmission von Licht verschiedener Wellenlängen beruhender Verfahren und Vorrichtungen. In dem Dokument wird jedoch von der Verwendung von ultraviolettem Licht für die Untersuchung der Echtheit von Banknoten abgeraten, da sich sichtbares, violettes Licht ähnlich dem ultraviolettem Licht verhält.

In EP 0 668 576 A2 wird eine Vorrichtung zur Erkennung der Echtheit von Banknoten beschrieben, bei der durch ultraviolette Bestrahlung erzeugtes sichtbares Licht ausgewertet wird. Um Alterungserscheinungen einer UV-Lichtquelle ausgleichen zu können, ist eine Kalibrierung vorgesehen, bei der die Menge des von der UV-Lichtquelle erzeugten Lichts gemessen wird, falls keine Banknote zur Prüfung vorliegt.

Aus der DE 199 01 702 A1 ist ein Verfahren bekannt, bei dem die Verschmutzung eines Meßfensters mittels ultraviolettem Licht ermittelt wird.

Weitere Vorrichtung zur Prüfung von Banknoten sind aus US 5,280,333 und US 2001/0006556 A1 bekannt.

Aufgabe der vorliegenden Erfindung ist es deshalb, ein Verfahren und eine Vorrichtung für die Überprüfung der Echtheit von Blattgut, insbesondere von Banknoten, mittels ultraviolettem Lichts anzugeben, mit denen eine zuverlässigere Unterscheidung zwischen Fälschungen und echten Banknoten möglich ist.

Diese Aufgabe wird erfindungsgemäß durch die Merkmale der Ansprüche 1 und 5 gelöst.

Die Erfindung geht davon aus, daß zur Überprüfung der Echtheit von Blattgut, insbesondere von Banknoten, ultraviolettes Licht eingesetzt wird, wobei das transmittierte, d. h. das das zu überprüfende Blattgut durchdringende, ultraviolette Licht für die Überprüfung der Echtheit herangezogen wird. Zusätzlich zum ultravioletten Licht wird jedoch mindestens ein weiteres Licht unterschiedlicher Wellenlänge verwendet, wobei das transmittierte, d. h. das das zu überprüfende Blattgut durchdringende, weitere Licht ebenfalls für die Überprüfung der Echtheit herangezogen wird, wozu das transmittierte ultraviolette Licht und das transmittierte weitere Licht in ein Verhältnis zueinander gesetzt werden. Darüber hinaus wird überprüft, ob das ultraviolette Licht von dem Blattgut in Licht einer andere Wellenlänge gewandelt wird, wobei die Wellenlänge des weiteren Lichts derart festgelegt ist, daß sie der

Wellenlänge des vom Blattgut gewandelten Lichts der weiteren Wellenläge entspricht.

Der Vorteil der Erfindung ist insbesondere darin zu sehen, daß im Gegensatz zu den aus dem Stand der Technik bekannten Verfahren und Vorrichtungen die Überprüfung nahezu unabhängig von einer Verschmutzung des zu untersuchenden Blattguts erfolgen kann, da die Effekte, die aufgrund der Verschmutzung entstehen, auf das durch das Blattgut hindurchtretende Licht sowohl für das ultraviolette Licht als auch für das weitere Licht gleich sind oder in einem definiertem Zusammenhang stehen. Werden nun das transmittierte ultraviolette Licht und das transmittierte weitere Licht in ein Verhältnis zueinander gesetzt, heben sich die verschmutzungsbedingten Effekte auf. Durch die Festlegung der Wellenlänge des weiteren Lichts kann zudem gleichzeitig das Vorhandensein von Aufhellern überprüft werden, wozu der zweite Sensor mitverwendet werden kann.

Weitere Vorteile der vorliegenden Erfindung ergeben sich aus den abhängigen Ansprüchen sowie der nachfolgenden Beschreibung von Ausführungsformen anhand von Figuren.

Es zeigt:
- Figur 1: eine erste Ausführungsform einer Vorrichtung für die Überprüfung der Echtheit von Blattgut mittels ultraviolettem Licht, und
- Figur 2: eine zweite Ausführungsform einer Vorrichtung für die Überprüfung der Echtheit von Blattgut mittels ultraviolettem Licht.

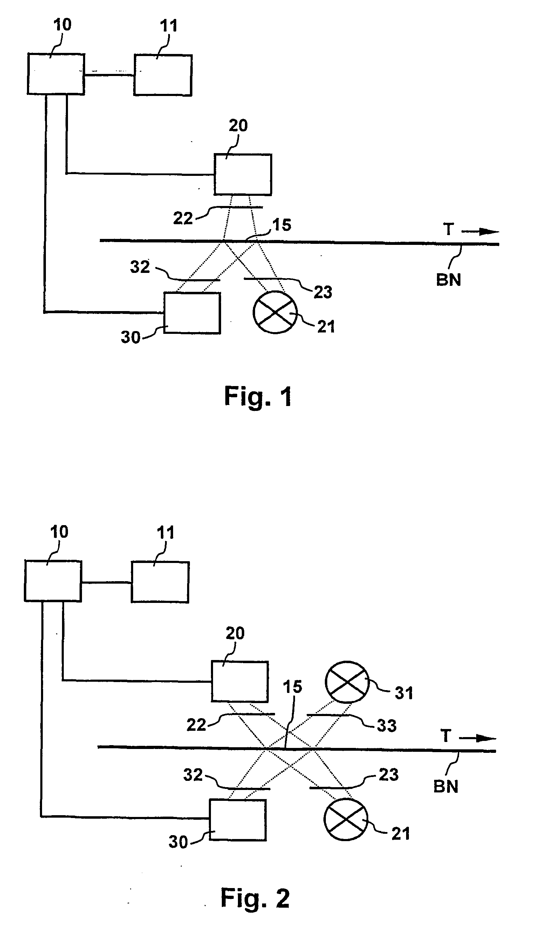

In Figur 1 ist eine erste Ausführungsform einer Vorrichtung für die Überprüfung der Echtheit von Blattgut, insbesondere von Banknoten, mittels ultraviolettem Licht dargestellt. In der nachfolgenden Beschreibung wird davon ausgegangen, daß es sich bei dem Blattgut um Banknoten handelt. Die Banknoten BN werden von einem nicht dargestellten Transportsystem in einer Transportrichtung T an einem Sensor 20 und einer Lichtquelle 21 vorbeitransportiert. Dabei ist es möglich, daß die Banknoten BN entlang ihrer langen oder entlang ihrer kurzen Seite transportiert werden. Die Lichtquelle 21 erzeugt Licht, das für die Überprüfung der Echtheit der Banknoten BN geeignet ist und im ultravioletten Bereich liegt, d. h. eine Wellenlänge unterhalb 400 nm aufweist. Die Lichtquelle 21 kann das ultraviolette Licht direkt erzeugen oder es kann ein Filter 23 vorgesehen werden, welches nur ultraviolettes Licht durchläßt. Das ultraviolette Licht durchdringt die Banknote BN an einer Stelle 15, die mit dem Transport der Banknote BN in der Transportrichtung T über die gesamte Länge oder Breite (je nach gewählter Transportart) der Banknote BN streicht. Das transmittierte ultraviolette Licht wird von dem Sensor 20 erfaßt. Der Sensor 20 kann nur für das von der Lichtquelle 21 erzeugte ultraviolette Licht empfindlich sein oder es kann ein Filter 22 vorgesehen werden, welches nur entsprechendes ultraviolettes Licht zum Sensor 20 durchläßt. Als Lichtquelle 21 können beispielsweise eine oder mehrere UV-Leuchtdioden verwendet werden. Ebenso ist es möglich beispielsweise eine oder mehrere Leuchtröhren zu verwenden, die ultraviolettes Licht erzeugen. Am Ort der Filter 22 und 23 können zusätzlich oder anstelle der Filter 22 und 23 weitere optische Systeme wie Linsen vorgesehen werden, um beispielsweise eine besondere Fokusierung an der Stelle 15 oder am Sensor 20 zu erreichen.

Zur Überprüfung der Echtheit der Banknoten BN sendet die Lichtquelle 21 ultraviolettes Licht mit einer Wellenlänge kleiner 400 nm aus. Da bei der Transmission des ultravioletten Lichts durch die Banknote BN der größte Teil des ultravioletten Lichts im Material der Banknote BN absorbiert wird, wurde bisher davon abgesehen, die Messung des durch die Banknote BN transmittierten ultravioletten Lichts als Kriterium für die Überprüfung der Echtheit der Banknote BN zu verwenden. Es wurde jedoch festgestellt, daß die Auswertung des transmittierten ultravioletten Lichts - gerade wegen der großen Beeinflussung des ultravioletten Lichts beim Durchtritt durch die Banknote BN, d. h. wegen der auftretenden großen Absorption - eine besonders gute Aussagekraft über das Material der jeweils überprüften Banknote BN und damit über deren Echtheit hat.

Trotz der auf der Seite des Sensors 21 geringen Menge an ultraviolettem Licht, die nach der Transmisson zur Verfügung steht, ist eine bessere Unterscheidung zwischen echten Banknoten BN und Fälschungen möglich, da die relativen Unterschiede zwischen echten Banknoten BN und Fälschungen sehr groß sind.

Fälschungen aus normalem Papier ohne optischen Aufheller, d. h. Papier, das aus Holz hergestellt wurde, weisen die beste Durchlässigkeit für ultraviolettes Licht auf. Bestehen die Fälschungen aus Papier, das wie echte Banknoten aus Baumwolle hergestellt wurde, weisen die Fälschungen eine schlechte Durchlässigkeit für ultraviolettes Licht auf, da diesem Papier in der Regel Stoffe zugesetzt sind, welche das ultraviolette Licht absorbieren, um die von echten Banknoten bekannte Aufhellerfreiheit nachzuahmen.

Somit können Banknoten BN sicher von Fälschungen unterschieden werden, wenn die vom Sensor 20 erfaßte Menge transmittierten, ultravioletten Lichts oberhalb eines unteren Schwellenwerts und unterhalb eines oberen Schwellenwerts liegen. Erfaßt der Sensor 20 eine Menge ultravioletten Lichts, die über dem oberen Schwellenwert liegt, liegt eine Fälschung aus normalem Papier (Holz) vor, liegt die Menge des vom Sensor 20 erfaßten ultravioletten Lichts unterhalb des unteren Schwellenwerts, liegt eine Fälschung aus Banknotenpapier (Baumwolle) vor.

Da der Effekt auf das ultraviolette Licht - wie oben beschrieben - bei Transmission besonders groß ist, lassen sich Fälschungen sicher von echten Banknoten unterscheiden, da die verwendeten Schwellenwerte einen großen Abstand zueinander aufweisen. Die geschilderten Effekte treten für Banknoten aus allen bisher untersuchten Währungen auf, etwaige Abweichungen lassen sich durch geeignete Auswahl der Schwellenwerte ausgleichen.

Zur Auswertung der vom Sensor 20 ermittelten Mengen des transmittierten ultravioletten Lichts ist eine Auswerteeinheit 10 mit angeschlossenem Speicher 11 vorgesehen. Die Auswerteeinheit 10 kann beispielsweise von einem Mikroprozessor mit angeschlossenem Speicher 11 gebildet werden, wobei der Speicher 11 einen flüchtigen und eine nichtflüchtigen Bereich aufweisen kann. Im nichtflüchtigen Bereich des Speichers 11 sind insbesondere die erwähnten Schwellenwerte gespeichert. Damit die vom Sensor 20 stammenden Messungen von der Auswerteeinheit 10 verarbeitet werden können, ist beispielsweise im Sensor 20 ein Analog/Digital-Wandler vorgesehen, der das analoge Ausgangssignal des Sensors 20 in einen digitalen Wert wandelt.

Die Auswerteeinheit 10 vergleicht die vom Sensor 20 stammenden Werte mit den Schwellenwerten und überprüft so die Echtheit der Banknote BN. Abhängig vom Ergebnis der Überprüfung kennzeichnet die Auswerteeinheit 10 die Banknote BN als echt oder als Fälschung. Diese Kennzeichnung kann für die weitere Bearbeitung der Banknote BN verwendet werden, um z. B. das oben erwähnte Transportsystem zu steuern, wodurch es ermöglicht wird, Fälschungen von echten Banknoten zu trennen. Dazu werden die Fälschungen beispielsweise in ein besonderes Ausgabefach transportiert.

Zur Auswertung der Werte des Sensors 20 durch die Auswerteeinheit 10 bieten sich verschiedene Vorgehensweisen an. Beispielsweise kann aus sämtlichen Werten, die erzeugt werden während die Banknote BN am Sensor 20 vorbeitransportiert wird, ein Mittelwert von der Auswerteeinheit 10 erzeugt werden, der mit den Schwellenwerten verglichen wird. Ebenso ist es möglich, für die zu überprüfenden Banknoten mindestens ein Muster zu ermitteln und im Speicher 11 abzuspeichern. In diesem Fall werden die Werte, die erzeugt werden während die Banknote BN am Sensor 20 vorbeitransportiert wird, mit dem Muster auf Übereinstimmung überprüft, um die Echtheit der Banknote BN zu ermitteln. Eine weitere Möglichkeit besteht darin, nur bestimmte Bereiche der Banknote BN, z. B. Bereiche ohne Bedruckung, zu untersuchen und mit Schwellenwerten zu vergleichen.

Eine weitere Verbesserung der Echtheitsprüfung kann erreicht werden, wenn auf der Seite der Lichtquelle 21 ein weiterer Sensor 30 vorgesehen wird, der Licht im sichtbaren Bereich detektieren kann, d. h. mit einer Wellenlänge größer 400 nm. Sollte der Sensor 30 auch Licht mit kleinerer Wellenlänge detektieren können, kann ein Filter 32 vorgesehen werden, das für diese Lichtanteile nicht durchlässig ist. Liegt eine Fälschung vor, die optischen Aufheller enthält, wird das ultraviolette Licht der Lichtquelle 21 durch einen Fluoreszenzeffekt in sichtbares Licht gewandelt, das vom Sensor 30 detetkiert wird. Damit das Signal des Sensors 30 von der Auswerteeinheit 10 verarbeitet werden kann, enthält der Sensor 30 einen Analog/Digital-Wandler, der das Sensorsignal in einen digitalen Wert wandelt. Überschreitet der digitale Wert einen vorgegebenen und im Speicher 11 gespeicherten Schwellenwert für die Aufhellermessung, wird eine Fälschung von der Auswerteeinheit 10 erkannt.

In Figur 2 ist eine zweite Ausführungsform einer Vorrichtung für die Überprüfung der Echtheit von Blattgut, insbesondere von Banknoten, mittels ultraviolettem Licht dargestellt. Die zweite Ausführungsform nach Figur 2 ist im wesentlichen wie die erste Ausführungsform nach Figur 1 aufgebaut. Die Funktion der Vorrichtung nach der zweiten Ausführungsform entspricht im wesentlichen ebenfalls der Funktion der Vorrichtung nach der ersten Ausführungsform. Zusätzlich weist die Vorrichtung jedoch auf der Seite des Sensors 20 für das ultraviolette Licht eine zweite Lichtquelle 31 auf, die Licht in einem sichtbaren Bereich erzeugt, d. h. mit einer Wellenlänge größer 400 nm. Sollte die zweite Lichtquelle 31 kurzwelligere Anteile aufweisen kann ein Filter 33 vorgesehen werden, welches diese nicht passieren läßt.

Wie oben im Zusammenhang mit Figur 1 beschrieben, dienen die erste Lichtquelle 21 und der erste Sensor 20 für die Überprüfung der Echtheit von Banknoten mittels transmittiertem, ultraviolettem Licht. Der zweite Sensor 30, der Licht im sichtbaren Bereich detektiert und auf der Seite der ersten, ultraviolettes Licht erzeugenden Lichtquelle 21 angeordnet ist, dient - wie beschrieben - dazu, das Vorhandensein von optischen Aufhellern nachzuweisen.

Zusätzlich wird der zweite Sensor 30 dazu verwendet das transmittierte Licht der zweiten Lichtquelle 31 für sichtbares Licht zu detektieren. Liegt eine Fälschung vor, bei der optischer Aufheller im Papier enthalten ist, erzeugt der Fluoreszenzeffekt eine relativ große Menge sichtbaren Lichts, so daß der oben beschriebene Schwellenwert für die Aufhellermessung überschritten wird. Tritt der Fluoreszenzeffekt nicht auf, ist nur eine wesentlich kleinere Menge sichtbaren Lichts vorhanden, die unter dem Schwellwert für die Aufhellermessung liegt. Dieses Licht stammt von der zweiten Lichtquelle 31 und wurde durch die Banknote BN transmittiert. Vom zweiten Sensor 30 werden die entsprechenden Werte, die von einem Analog/Digital-Wandler digitalisiert werden, an die Auswerteeinheit 10 geleitet und von der Auswerteeinheit 10 ins Verhältnis zu den Werten des ersten Sensors 20 gesetzt, z. B. durch Division der Werte des ersten Sensors 20 durch die Werte des zweiten Sensors 30. Vor der Division der Werte oder anstelle der Division kann auch eine spezielle Korrektur eines anderen mathematischen Zusammenhangs erfolgen, der sich aus der gleichartigen Beeinflussung des sichtbaren und des ultravioletten Lichts ergibt.

Diese Vorgehensweise gestattet es eine Verschmutzung der zu überprüfenden Banknoten BN zu kompensieren, da die oben beschriebenen Effekte auf das Licht bei der Transmission durch die Banknote durch Verschmutzung nicht verändert werden. Die Verschmutzung bewirkt vielmehr eine Reduzierung der transmittierten Lichtmenge, sowohl für das Licht der ersten Lichtquelle 21 als auch für das Licht der zweiten Lichtquelle 31. Die Verschmutzung von Banknoten kann deshalb kompensiert werden, wenn die Werte des ersten Sensors 20 mit den Werten des zweiten Sensors 30 - wie beschriebenins Verhältnis gesetzt werden. Selbstverständlich müssen in diesem Fall geeignete Schwellenwerte bzw. Muster für die Überprüfung zur Verfügung gestellt und im Speicher 11 gespeichert werden. Die Schwellenwerte werden mittels echter Banknoten dadurch gewonnen, daß Werte des ersten Sensors 20 mit Werten des zweiten Sensors 30 ins Verhältnis gesetzt werden.

Da die Verschmutzung der Banknoten starke lokale Schwankungen aufweisen kann, hat es sich als besonders sinnvoll erwiesen, daß erster und zweiter Sensor 20 und 30 die Banknote BN an der selben Stelle 15 auswerten.

Idealerweise wird - wie beschrieben - die Wellenlänge der zweiten Lichtquelle 31 so gewählt, daß für die Detektion des transmittierten Lichts der für den Nachweis von optischen Aufhellern bereits vorhandene zweite Sensor 30 verwendet werden kann, beispielsweise derart, daß das Licht im blauen Bereich liegt. Ebenso ist es aber möglich eine andere Wellenlänge zu wählen, um Verschumutzungseffekte zu kompensieren. Insbesondere kann die Wellenlänge der zweiten Lichtquelle 31 und des zweiten Sensors 30 auch kleiner als die Wellenlänge der ersten Lichtquelle 21 und des ersten Sensors 20 sein. In diesem Fall muß aber ein weiterer (nicht dargestellter) Sensor auf der Seite der ersten Lichtquelle 21 vorgesehen werden, um das Vorhandensein von optischen Aufhellern überprüfen zu können.

Um Effekte wie Alterung, Verschmutzung oder Temperaturschwankungen, denen die Sensoren 20, 30 bzw. die Lichtquellen 21, 31 ausgesetzt sind, zu kompensieren, kann es vorgesehen sein, in den Lücken zwischen zu überprüfenden Banknoten BN eine Kalibrierung vorzunehmen. Dabei werden Referenzwerte, die im Speicher 11 gespeichert sind von der Auswerteeinheit 10 mit den Werten der Sensoren 20, 30 verglichen. Treten Abweichungen auf, kann die Auswerteeinheit 10 beispielsweise die Lichtquellen 21, 31 nachregeln. Eine Kalibrierung kann auch mittels separater Monitorempfänger (nicht dargestellt) durchgeführt werden, d. h. Sensoren welche das Licht der Lichtquellen 21,31 empfangen. Erfassen die Monitorempfänger Abweichungen, erfolgt eine Nachregelung.

Neben den beschriebenen Ausführungsformen sind vielfältige Abwandlungen denkbar. Insbesondere kann die Anordnung der Sensoren und/ oder Lichtquellen verändert werden.

Ebenfalls können am Ort der Filter 22, 23, 32 und 33 zusätzlich oder anstelle der Filter 22, 23, 32 und 33 weitere optische Systeme wie Linsen vorgesehen werden, um beispielsweise eine besondere Fokusierung an der Stelle 15 oder den Sensoren zu erreichen.

Weitere Änderungen ergeben sich durch die Verwendung mehrerer Sensoren 20, 30 und zugehöriger Lichtquellen 21, 31, um Messungen in mehreren Spuren durchführen zu können. Dabei können auch so viele aneinander angrenzende oder überlappende Spuren vorgesehen werden, daß eine vollfächige Überprüfung der Banknote möglich ist.

Eine weitere Abwandlung ist möglich, wenn die Lichtquellen 21 bzw. 31 nicht nur Licht unterhalb bzw. oberhalb 400 nm abgeben, sondern Licht eines begrenzten spektralen Bereichs. Die erste Lichtquelle 21 kann z. B. Licht in einem Bereich von 350 - 400 nm abgeben, während die weitere Lichtquelle 31 Licht in einem Bereich von 400 - 450 nm abgibt. In diesem Fall können die Sensoren 20 bzw. 30 und/ oder die Filter 22, 23, 32, 33 entsprechend angepaßt sein.

In einer weiteren bevorzugten Ausgestaltung der erfindungsgemäßen Vorrichtung ist ein Lock-In-Verstärker zur Verstärkung von Ausgangssignalen, vor deren Analog/Digital-Wandlung, mindestens eines der Sensoren 20, 30 vorgesehen. Lock-In-Verstärker werden bei der Messung und Verarbeitung sehr schwacher Analogsignale eingesetzt, wobei der Signalhintergrund sehr stark unterdrückt wird. Bei einem Lock-In-Verstärker wird das modulierte Ausgangssignal eines Sensors verstärkt und mit einem normierten Referenzsignal derselben Modulationsfrequenz in einem Synchrondemodulator demoduliert. In einem Tiefpaßfilter werden anschließend die hochfrequenten Anteile herausgefiltert. Als Ergebnis erhält man ein Signal, welches proportional ist zur Amplitude des verstärkten emittierten Fluoreszenzlichts (Sensor 30) bzw. des reflektierten ultravioletten Lichts (Sensor 20). Da sich der Einsatz eines Lock-In-Verstärkers insbesondere zur Verstärkung sehr schwacher eignet, kann hiermit sehr schwaches Licht mit hoher Genauigkeit gemessen werden. Dies ist besonders dann von Vorteil, wenn die Intensität der Lichtquelle im Verlauf ihrer Betriebsdauer abnimmt und infolgedessen das in der zu überprüfenden Banknote angeregte Fluoreszenzlicht bzw. transmittierte ultraviolette Licht schwächer wird.

Die vorliegende Erfindung eignet sich besonderes für Banknotenbearbeitungsmaschinen, z. B. für Sortier- und/ oder Zählmaschinen und/ oder Geldannahmeautomaten.

## Patentansprüche

1. Verfahren für die Überprüfung der Echtheit von Blattgut, insbesondere von Banknoten, mittels ultraviolettem Licht, wobei das Blattgut mit ultraviolettem Licht und einem zweiten Licht mit einer zum ultravioletten Licht unterschiedlichen Wellenlänge beleuchtet wird und das durch das Blattgut transmittierte ultraviolette Licht und das durch das Blattgut transmittierte zweite Licht zueinander ins Verhältnis gesetzt werden und das Verhältnis für die Überprüfung der Echtheit des Blattguts bewertet wird, wobei überprüft wird, ob das ultraviolette Licht von dem Blattgut in Licht einer anderen Wellenlänge gewandelt wird, **dadurch gekennzeichnet, daß** die Wellenlänge des zweiten Lichts derart festgelegt ist, daß sie der Wellenlänge des vom Blattgut gewandelten Lichts der anderen Wellenlänge entspricht.

2. Verfahren nach Anspruch 1, wobei für das Verhältnis mindestens ein Schwellenwert oder mindestens ein Muster von mindestens einem echten Stück Blattgut für die Überprüfung der Echtheit des Blattguts abgeleitet wird.

3. Verfahren nach Anspruch 1 oder 2, wobei das transmittierte ultraviolette und das transmittierte zweite Licht vom selben Ort des zu überprüfenden Blattguts stammen.

4. Verfahren nach einem der Ansprüche 1 bis 3, wobei das transmittierte ultraviolette und das transmittierte zweite Licht zur gleichen Zeit ausgewertet werden.

5. Vorrichtung für die Überprüfung der Echtheit von Blattgut, insbesondere von Banknoten, mittels ultraviolettem Licht, mit einer ersten Lichtquelle (21) zur Erzeugung des ultravioletten Lichts, wobei die Lichtquelle (21) das Blattgut (BN) mit ultraviolettem Licht beleuchtet, und einem ersten Sensor (20), der Werte für durch das Blattgut (BN) transmittiertes Licht der ersten Lichtquelle (21) erzeugt, einer zweiten Lichtquelle (31) zur Erzeugung von Licht mit einer zum ultravioletten Licht der ersten Lichtquelle (21) unterschiedlichen Wellenlänge, und einem zweiten Sensor (30), der Werte für durch das Blattgut (BN) tranmittiertes Licht der zweiten Lichtquelle (31) erzeugt, sowie einer Auswerteeinheit (10) für die Überprüfung der Echtheit des Blattguts (BN) auf der Grundlage eines Verhältnisses der Werte des ersten Sensors (20) zu den Werten des zweiten Sensors (30), wobei die Auswerteeinheit (10) die Werte des zweiten Sensors (30) überprüft, ob das ultraviolette Licht von dem Blattgut in Licht einer anderen Wellenlänge gewandelt wird, **dadurch gekennzeichnet, daß** die Wellenlänge der zweiten Lichtquelle (31) derart festgelegt ist, daß sie der Wellenlänge des vom Blattgut gewan-delten Lichts der anderen Wellenlänge entspricht.

6. Vorrichtung nach Anspruch 5, wobei die Sensoren (20, 30) die selbe Stelle (15) des Blattguts erfassen.

7. Vorrichtung nach Anspruch 5 oder 6, wobei die Sensoren (20, 30) das Blattgut gleichzeitig erfassen.

8. Vorrichtung nach einem der Ansprüche 5 bis 7, wobei mehrere Sensoren (20, 30) und/oder Lichtquellen (21, 31) vorhanden sind um mehrere Spuren des Blattguts zu erfassen.

9. Vorrichtung nach Anspruch 8, wobei die Sensoren (20, 30) die Oberfläche des Blattguts vollständig erfassen.

10. Vorrichtung nach einem der Ansprüche 5 bis 9, wobei ein Speicher (11) mit der Auswerteeinheit (10) verbunden ist, der mindestens einen Schwellenwert oder mindestens ein Muster enthält, die von mindestens einem echten Stück Blattgut für die Überprüfung der Echtheit des Blattguts abgeleitet sind, und von der Auswerteeinheit (10) mit dem Verhältnis der Werte des oder der Sensoren (20) zu den Werten des oder der zweiten Sensoren (30) verglichen werden.

## Claims

1. A method for verifying the authenticity of sheet material, in particular bank notes, by means of ultraviolet light, wherein the sheet material is illuminated with ultraviolet light and a second light having a wavelength different from the ultraviolet light, and the ultraviolet light transmitted through the sheet material and the second light transmitted through the sheet material are set in mutual relation and the relation is evaluated for verifying the authenticity of the sheet material, wherein it is verified whether the ultraviolet light is converted by the sheet material to light of an other wavelength, **characterized in that** the wavelength of the second light is set such that it corresponds to the wavelength of the light of the other wavelength converted by the sheet material.

2. The method according to claim 1, wherein at least one threshold value or at least one pattern for the relation is derived from at least one authentic piece of sheet material for verifying the authenticity of the sheet material.

3. The method according to claim 1 or 2, wherein the transmitted ultraviolet light and the transmitted second light originate from the same position on the sheet material to be verified.

4. The method according to any of claims 1 to 3, wherein the transmitted ultraviolet light and the transmitted second light are evaluated at the same time.

5. An apparatus for verifying the authenticity of sheet material, in particular bank notes, by means of ultraviolet light, having a first light source (21) for producing the ultraviolet light, whereby the light source (21) illuminates the sheet material (BN) with ultraviolet light, and a first sensor (20) which produces values for light of the first light source (21) transmitted through the sheet material (BN), a second light source (31) for producing light having a wavelength different from the ultraviolet light of the first light source (21), and a second sensor (30) which produces values for light of the second light source (31) transmitted through the sheet material (BN), and an evaluation unit (10) for verifying the authenticity of the sheet material (BN) on the basis of a relation of the values of the first sensor (20) to the values of the second sensor (30), wherein the evaluation unit (10) verifies the values of the second sensor (30) as to whether the ultraviolet light is converted by the sheet material to light of an other wavelength, **characterized in that** the wavelength of the second light source (21) is set such that it corresponds to the wavelength of the light of the other wavelength converted by the sheet material.

6. The apparatus according to claim 5, wherein the sensors (20, 30) detect the same position (15) on the sheet material.

7. The apparatus according to claim 5 or 6, wherein the sensors (20, 30) detect the sheet material at the same time.

8. The apparatus according to any of claims 5 to 7, wherein several sensors (20, 30) and/or light sources (21, 31) are present for detecting several tracks of the sheet material.

9. The apparatus according to claim 8, wherein the sensors (20, 30) detect the surface of the sheet material completely.

10. The apparatus according to any of claims 5 to 9, wherein a memory (11), which is connected to the evaluation unit (10), contains at least one threshold value or at least one pattern, which are derived from at least one authentic piece of sheet material for verifying the authenticity of the sheet material, and are compared by the evaluation unit (10) with the relation of the values of the sensor or the sensors (20) to the values of the second sensor or sensors (30).

## Revendications

1. Procédé pour le contrôle de l'authenticité d'articles en feuille, en particulier de billets de banque, au moyen de la lumière ultraviolette, l'article en feuille étant éclairée avec de la lumière ultraviolette et une seconde lumière avec une longueur d'onde différente de la lumière ultraviolette et la lumière ultraviolette transmise par l'article en feuille et la seconde lumière transmise par l'article en feuille étant placées dans un certain rapport l'une par rapport à l'autre et le rapport étant évalué pour le contrôle de l'authenticité de l'article en feuille, sachant qu'on vérifie si la lumière ultraviolette est transformée par l'article en feuille en lumière d'une autre longueur d'onde, **caractérisé en ce que** la longueur d'onde de la seconde lumière est fixée de telle sorte qu'elle correspond à la longueur d'onde de la lumière transformée par l'article en feuille de l'autre longueur d'onde.

2. Procédé selon la revendication 1, dans lequel au moins une valeur seuil ou au moins un modèle d'au moins un bout authentique d'article en feuille est déduit pour le rapport pour le contrôle de l'authenticité de l'article en feuille.

3. Procédé selon la revendication 1 ou 2, dans lequel la lumière ultraviolette transmise et la seconde lumière transmise proviennent du même emplacement de l'article en feuille à contrôler.

4. Procédé selon l'une quelconque des revendications 1 à 3, dans lequel la lumière ultraviolette transmise et la seconde lumière transmise sont analysées en même temps.

5. Dispositif pour le contrôle de l'authenticité d'articles en feuille, en particulier de billets de banque, au moyen de lumière ultraviolette, comprenant une première source lumineuse (21) pour générer la lumière ultraviolette, la source lumineuse (21) éclairant l'article en feuille (BN) avec de la lumière ultraviolette, et un premier capteur (20), qui génère des valeurs pour la lumière, transmise par l'article en feuille (BN), de la première source lumineuse (21), une seconde source lumineuse (31) pour générer de la lumière avec une longueur d'onde différente de la lumière ultraviolette de la première source lumineuse (21), et un second capteur (30), qui génère des valeurs pour de la lumière, transmise par l'article en feuille (BN), de la seconde source lumineuse (31), et une unité d'analyse (10) pour le contrôle de l'authenticité de l'article en feuille (BN) sur la base d'un rapport entre des valeurs du premier capteur (20) et les valeurs du second capteur (30), l'unité d'analyse (10) contrôlant les valeurs du second capteur (30) pour savoir si la lumière ultraviolette de l'article en feuille est convertie en lumière d'une autre longueur d'onde, **caractérisé en ce que** la longueur d'onde de la seconde source lumineuse (31) est fixée de telle sorte qu'elle correspond à la longueur d'onde de la lumière, convertie par l'article en feuille, de l'autre longueur d'onde.

6. Dispositif selon la revendication 5, dans lequel les capteurs (20, 30) effectuent la capture au même emplacement (15) de l'article en feuille.

7. Dispositif selon la revendication 5 ou 6, dans lequel les capteurs (20, 30) effectuent simultanément la capture de l'article en feuille.

8. Dispositif selon l'une quelconques des revendications 5 à 7, dans lequel plusieurs capteurs (20, 30) et/ou sources lumineuses (21, 31) sont présents pour capter plusieurs pistes de l'article en feuille.

9. Dispositif selon la revendication 8, dans lequel les capteurs (20, 30) captent complètement la surface de l'article en feuille.

10. Dispositif selon l'une quelconque des revendications 5 à 9, une mémoire (11) étant reliée à l'unité d'analyse (10), laquelle mémoire contient au moins une valeur seuil ou au moins un modèle, qui sont déduits d'au moins un bout véritable d'article en feuille pour le contrôle de l'authenticité de l'article en feuille, et sont comparés par l'unité d'analyse (10) avec le rapport entre les valeurs du ou des capteurs (20) et les valeurs du ou des seconds capteurs (30).
